# EUROPEAN PATENT APPLICATION

(11) **EP 2 687 313 A1**
(43) Date of publication of application: **22.01.2014**
(21) Application number: 12176916.0
(22) Date of filing: 18.07.2012
(51) Int. Cl.: B23K 20/12, B23K 20/233

(54) **Method of friction stir welding aluminum alloy materials containing second phase particles, and aluminum alloy panel produced thereby**

(71) Applicant: SUMITOMO LIGHT METAL INDUSTRIES, LTD., Minato-ku, Tokyo 105-8601 (JP)
(72) Inventor: Fukuda, Toshihiko, Minato-ku, Tokyo 105-8601 (JP); Ozeki, Yoshikazu, Minato-ku, Tokyo 105-8601 (JP)
(74) Representative: Kramer - Barske - Schmidtchen

(57) **Abstract**

First and second aluminum alloy materials, each comprised of a 5000-series aluminum alloy containing second phase particles having a diameter less than 5 µm in a distribution density of less than or equal to 10,000 second phase particles/mm², are welded together by abutting portions of the first and second aluminum alloy materials, and friction stir welding along the abutted portions to form an integrally-welded aluminum alloy panel. The friction stir welding is performed using a tool (8) having a shoulder (10) under the following conditions: (i) the shoulder (10) of the tool (8) has a diameter (d) in the range of 3 mm ≤ d ≤ 8 mm and (ii) the revolution number (r) of the tool (8) is 6 < r ≤ 20, wherein r is tool revolutions/length of the weld (4) in millimeters.

## Description

The present invention generally relates to a method for welding aluminum alloy materials, parts or members and to an aluminum alloy panel produced thereby. The aluminum alloy panel preferably has an anodized coating formed over welded and non-welded portions.

In the past, it has been difficult to produce an integrally-formed (i.e. seamless) aluminum alloy panel having a cover member that is only partially attached to a side member. Therefore, the side member and the cover member, which are each made of an aluminum alloy, have instead been formed separately and then integrally connected or joined, e.g., by fusion welding or laser welding. The integrally-connected side and cover members, which thus include a welded portion along the abutting surfaces, are then subjected to face milling in order to smoothen their surfaces. An anodized coating is subsequently formed on the smooth surfaces of the cover and side members to impart improved anti-corrosion and wear resistance properties to the aluminum alloy panel.

However, the anodized coating, which is formed on the surfaces of the integrally-connected side and cover members, may exhibit variations in color or lightness (color tone differences) between a portion corresponding to (covering) the weld (welded area) and other parts corresponding to (covering) an non-welded areas. The variations in color or lightness are believed to be due to structural changes of second phase particles in the weld into the form of a solid solution. The structural changes are caused by heat generated during the melt welding or other fusion connecting technique. As a result, the second phase particles become coarser (larger), whereby the distribution density of the second phase particles in the portion corresponding to (covering) the weld is significantly different from the other portions corresponding to (covering) the non-welded area(s). This change of the second phase particles has been found to have an adverse impact on the anodized coating.

To prevent the occurrence of variations in color or lightness (color tone differences) of the anodized coating for this reason, it has been suggested to employ friction stir welding in order to minimize heat-affected zones in the welded area when the aluminum alloy side and cover members are welded (see Japanese Patent Application Publication No. 2000-248399) .

However, even if friction stir welding is carried out to weld the aluminum alloy cover and side members, variations in color or tone (color tone differences) may still occur in the anodized coating along the weld. In this case, the variations in color or lightness are believed to be caused by the fragmentation of the second phase particles in the side and cover members into even finer particles along the weld. This fragmentation is believed to be caused by the stirring during the friction stir welding, which results in differences in the distribution of the second phase particles between the welded area and the non-welded area(s). Therefore, a significant difference results between these different areas in the distribution density of the second phase particles.

It is therefore an object of the present teachings to overcome this problem of the prior art, namely the variation in color or lightness (color tone differences) in the anodized coating formed over the surfaces of integrally-connected aluminum alloy materials, parts or members.

This object is achieved by the invention of the independent claims. Further developments of the invention are recited in the dependent claims.

According to one aspect of the present teachings, an aluminum alloy panel is formed by integrally welding aluminum alloy materials, parts or members under prescribed conditions in order to achieve a preferred distribution density of the second phase particles in the aluminum alloy materials, parts or members. More particularly, friction stir welding is preferably performed under the below-described prescribed conditions. In this case, a weld can be achieved that does not cause (or minimizes) variations in color or lightness (color tone differences) of an anodized coating between a portion corresponding to (covering) the weld (welded area) and other portions corresponding to (covering) non-welded area(s).

In another aspect of the present teachings, a method is provided for welding together two or more aluminum alloy materials, parts or members made of a 5000-series aluminum alloy containing second phase particles having particle diameters less than 5 µm and a distribution density (v) that satisfies the relationship 10,000 ≥ v (particles/mm²). The method includes forming a joint portion by abutting respective portions (e.g., end or edge portions) of the two or more aluminum alloy materials, parts or members, and friction stir welding along the joint portion to form a weld (welded area) that integrally-joins the two or more aluminum alloy materials, parts or members.

The friction stir welding is preferably performed under the following conditions: the shoulder of the friction stir welding tool has a diameter (d) in the range of 3 mm ≤ d ≤ 8 mm and the revolution number (r) of the tool is 6 < r ≤ 20, wherein r equals tool revolutions/mm, or more particularly the number of revolutions of the tool per a unit weld length of 1 mm.

By utilizing aluminum alloy materials, parts or members that are each (both) 5000-series aluminum alloys containing second phase particles having diameters less than 5 µm and a distribution density less than 10, 000 particles/mm², the fragmentation of the second phase particles caused by the stirring during the friction stir welding can be minimized. Therefore, no (or only minimal) streaks are apparent in the anodized coating formed over the welded and non-welded areas.

In addition, by subjecting the aluminum alloy members to friction stir welding under the conditions that the shoulder of the tool has a diameter (d) in the range of 3 mm ≤ d ≤ 8 mm and the revolution number (r) of the tool during the friction stir welding is 6 < r ≤ 20 revolutions/mm, heat input to the weld (welded area) during the welding process is optimized. As a result, the materials, parts or members to be welded can be reliably welded, and precipitation of fine second phase particles can be minimized. This further prevents or minimizes the appearance of streaks in the anodized coating.

Accordingly, the integrally-welded aluminum alloy materials, parts or members are prevented from having significant differences in the distribution of the second phase particles between the welded area and the non-welded area(s).

Therefore, when an anodized coating is subsequently formed on the surfaces of the integrally-welded aluminum alloy members before being supplied as a final product, there is no significant difference in the distribution of the second phase particles in the anodized coating between the welded area and the other non-welded area(s), thereby preventing the occurrence of variations in color or lightness (color tone differences) in the anodized coating between a portion corresponding to (covering) the welded area and other portions corresponding to (covering) the non-welded area(s).

The anodized coating preferably has a thickness between about 5 µm and 15 µm, more preferably about 10 µm. The average particle size (diameter) of the second phase particles is preferably in the range of 2-3 µm.

In case the particle diameters of the second phase particles in the aluminum alloy members are larger than 5 µm, it is likely that the second phase particles will be fragmented in the welded area due to the stirring during the friction stir welding. As a result, a significant difference will be generated in distribution of the second phase particles between the welded area and the other area(s), leading to color/lightness variations (color tone differences) between the different areas. Therefore, the diameters of the second phase particles in the aluminum alloy members are preferably not more than 5 µm.

If a tool having a tool shoulder with a diameter (d) less than 3 mm is used to friction stir weld the aluminum alloy materials, the stirring is not sufficiently performed over a wide enough area. As a result, a strong weld of the aluminum alloy materials is not obtained due to the failure to obtain a large or wide enough welded area. On the other hand, if the diameter d of the tool shoulder is more than 8 mm, the welded area is unnecessarily broadened and extends to an area in which the second phase particles may be fragmented. As a result, the color or lightness variation is more likely to occur in the anodized coating. Accordingly, the diameter d of the tool shoulder is preferably in the range of 3 mm ≤ d ≤ 8 mm.

Furthermore, if the revolution number r (revolutions/mm) of the tool during the friction stir welding is less than 6, the heat input into the weld (welded area) may be insufficient and air bubbles may be easily entrained (trapped) in the weld (welded area). As a result, a strong weld will not be formed. On the other hand, if the revolution number (r) exceeds 20 revolutions/mm, the heat input becomes excessive and the grain structure of the stirred parts (weld area) becomes coarser than that of the base material (i.e. the adjacent non-welded area (s)), thereby increasing the possibility of the occurrence of color or lightness variations in the anodized coating. Accordingly, the revolution number r of the tool during friction stir welding is preferably in the range of 6 < r ≤ 20 revolutions/mm and more preferably in the range of 10 ≤ r ≤ 20 revolutions/mm.

The parameter or variable "r" is the revolution number of the tool per welding length of 1 mm (i.e. a unit length), which can be obtained by dividing the number of tool revolutions (rotations) per minute A (rpm) by the transverse welding speed B (mm/min), i.e. the transverse or moving speed of the tool along the adjoined/abutting portions, which will form the weld (welded area).

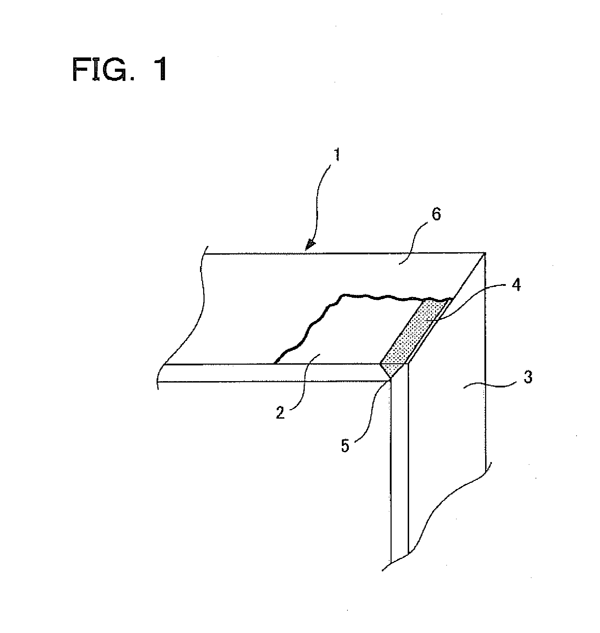

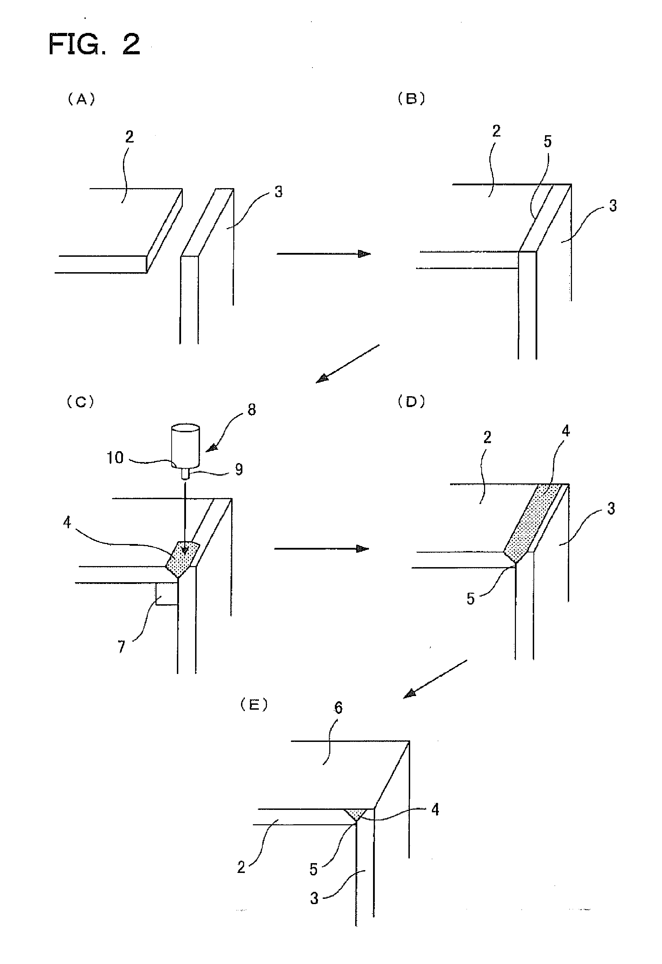

If the tool revolves or rotates in the counterclockwise direction relative to the direction in which the welding tool is moving, the structure of the welding bead tends to vary in its right end portion relative to the direction in which the welding is performed, thereby increasing the possibility of leaving streaks after the anodizing process. Therefore, if the welding will be performed with the edge portions of the parts or members located on the right-hand side as shown in Figs. 1 and 2, it is preferable that the revolution or rotating direction of the tool is counterclockwise relative to the direction in which welding tool is moving. In this case, the right end portion of the weld bead will be located in the vicinity of (adjacent to) the edge portions of the parts or members and any streaks in the anodized coating will become advantageously unnoticeable.

In another aspect of the present teachings, an aluminum alloy panel includes a cover member and a side member, which are both made of plate-shaped, aluminum alloy materials, parts or members. A weld or welded area along the abutting surfaces (e.g., a butt joint) of the cover member and the side member is formed by friction stir welding along the abutted portions. Thereafter, an anodized coating is formed by anodizing the surfaces of the cover member, the side member, and the welded area.

The cover member and the side member are each preferably made of a 5000-series aluminum alloy containing second phase particles having particle diameters less than 5 µm and the distribution density of such second phase particles is less than 10,000 particles/mm². The friction stir welding is performed to form the weld (welded area) under the following conditions:
the shoulder of the friction stir welding tool has a diameter (d) in the range of 3 mm ≤ d ≤ 8 mm and
the revolution number (r) of the tool is 6 < r ≤ 20 revolutions/mm.

The thickness (t) of the cover member and the side member are each respectively within the range of 1 mm ≤ t ≤ 3 mm.

If the cover member and the side member each have a thickness less than 1 mm, a housing obtained by joining the members through friction stir welding may not have sufficient stiffness to serve as a suitable housing. On the other hand, if the cover member and the side member each have a thickness more than 3 mm, even though it would satisfy the expected (required) stiffness, the weight of the housing will undesirably increase, which may increase the difficulty of achieving a light weight housing, which is one of the advantages of using aluminum materials.

The thickness referred to in this description is the thickness obtained after face milling to provide a smooth surface by removing any irregular (rough) surface elements of the bead caused by the friction stir welding, or the thickness after surface finishing using paper polishing, buffing, etc., after the face milling. If neither face milling nor surface finishing is performed, then the thickness is the rolled thickness.

If the friction stir welding is performed according to the present teachings, the second phase particles will be almost equally distributed in the welded area and the other non-welded areas in the cover member and the side member, which are integrally welded with each other. Therefore, the anodized coating subsequently formed on the surfaces of the integrally-joined cover and side members will not exhibit (or will exhibit only slight) color or lightness variations (color tone differences) between the portion corresponding to (covering) the welded area and the other parts corresponding to (covering the non-welded area(s).

In the present method, the second phase particles in the welded area of the aluminum alloy members are scarcely fragmented so that the distribution of the second phase particles in the welded area and the other areas will be at least substantially equal due to the synergistic effects of (i) setting the preferred distribution density of second phase particles in the aluminum alloy members and (ii) the preferred friction stir welding conditions. Therefore, an anodized coating having an at least substantially uniform appearance can be generated, thereby greatly improving the quality of the final product (i.e. the panel).

The aluminum alloys that are welded together according to the present teachings preferably contain no second phase particles larger than 5 µm. Further, as used herein, the "diameter" of the second phase particles is preferably determined based upon a geometric mean size, i.e. corresponding to the diameter of a true circle.

In certain embodiments, the first and second aluminum alloy materials may optionally consist of 0.01-0.09 wt% Si, 0.05-0.30 wt% Fe, 0.01-0.10 wt% Cu, 2.3-3.5 wt% Mg, 0.0001-0.02 wt% Cr, the balance being Al and inevitable impurities.

As used herein, the term "panel" is intended to encompass not only flat, or substantially flat, parts or members, but also parts or members having a three-dimensional structure, such as a housing. Therefore, the term "panel" should be understood in its broadest sense without limitation as to any particular structural features.

Fig. 1 is an enlarged perspective view of the main structural elements of an aluminum alloy panel produced according to the present method for welding aluminum alloy materials;

Figs. 2A-2E are schematic diagrams illustrating a progression of steps performed during the present method for welding aluminum alloy materials; and

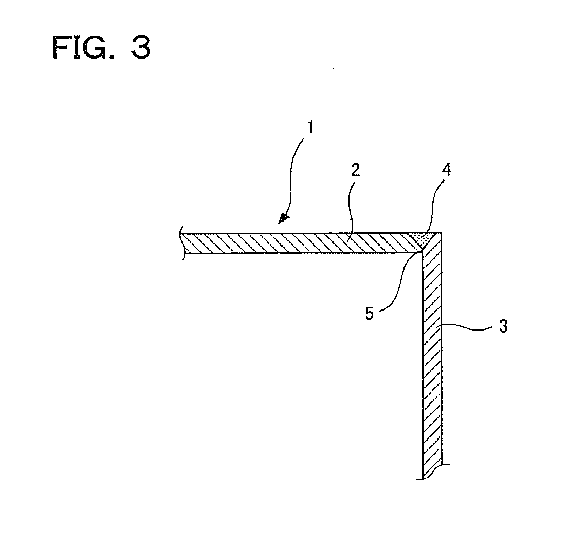

Fig. 3 is an enlarged cross-sectional view of the main structural elements of a welded area of a cover member integrally welded to a side member according to the present method.

To avoid, minimize or prevent the occurrence of color or lightness variations between a portion of the surface that corresponds to (covers) a welded area and other surface portions that correspond to (cover) non-welded area(s) in the anodized coating formed on the surface(s) of aluminum alloy materials, it is preferred to restrict both the distribution density of second phase particles in the aluminum alloy materials and the conditions under which friction stir welding is performed, as will be further discussed in the context of a preferred embodiment below.

Referring to Fig. 1, an aluminum alloy panel 1 produced according the present method includes an aluminum alloy cover member 2 having a thickness of 2 mm, an aluminum alloy side member 3 having a thickness of 2 mm, and a welded area (weld) 4 disposed along a joint portion (e.g., a butt joint) 5 where the aluminum alloy cover member 2 and the aluminum alloy side member 3 are welded. After face milling the welded area 4, an anodized coating 6 is formed on the surfaces of the integrally-joined aluminum alloy cover member 2 and the aluminum alloy side member 3 by anodizing using, e.g., sulfuric acid.

Table 1 shows the chemical compositions of three types of alloys, namely alloy 1, alloy 2, and 5052 alloy, which were used to make three aluminum alloy panels. Both of the cover member 2 and the side member 3 of each particular panel were manufactured from the same alloy. Alloy 1 is a 5000-series alloy that includes second phase particles having a diameter of less than 5 µm in a distribution density of 3,670 particles/mm². Alloy 2 is a 5000-series alloy that includes second phase particles having a diameter of less than 5 µm in a distribution density of 8,210 particles/mm². The 5052 alloy is a 5000-series alloy that includes second phase particles having a diameter of less than 5 µm in a distribution density of 11,360 particles/mm².

The distribution density of the second phase particles was determined as follows:

First, 0.5 mm of the surface layer was removed by paper polishing (e.g., by contacting/rubbing the surface with a suitable grade of sand paper) and buffing, and then the new surface was etched with 5% hydrogen fluoride. Thereafter, the resulting surface was observed at a magnification of 400 times using an optical microscope, and the number of particles having a diameter of less than 5 µm distributed within an area of 1 mm² was measured through an image analysis using 1 µm dot pitch.

**(Table 1)**

| (mass %) | | | | | | | | | |
|---|---|---|---|---|---|---|---|---|---|
| Materials | Si | Fe | Cu | Mn | Mg | Cr | Zn | Ti | Al |
| Alloy 1 | 0.05 | 0.08 | 0.05 | 0.00 | 3.06 | 0.01 | 0.00 | 0.00 | Bal. |
| Alloy 2 | 0.08 | 0.17 | 0.02 | 0.00 | 3.45 | 0.01 | 0.00 | 0.00 | Bal. |
| 5052 Alloy | 0.10 | 0.31 | 0.02 | 0.01 | 2.37 | 0.18 | 0.01 | 0.01 | Bal. |

Test samples were prepared in the following manner. An ingot was produced by semi-continuous casting of each of the above-described alloy 1, alloy 2 and 5052 alloy. Then, each ingot was subjected to homogenization, hot rolling and cold rolling to obtain a plate having a thickness of 2.5 mm. Each plate was subsequently annealed to the O-temper (full-softening). Two plates having a size of 250 mm (width) × 250 mm (length) were prepared from each alloy and respectively used as the cover member 2 and the side member 3.

The cover members 2 and the side members 3 prepared from each alloy were then abutted against each other as shown in Figs. 2A and 2B and integrally welded according to the below-described method, whereby three welded aluminum alloy panels were obtained. That is, the cover member 2 and the side member 3 were brought into contact with each other to form the joint portion 5.

As shown in Fig. 2C, a support or backing piece 7 was placed in contact with the rear side of the joint portion 5 and the cover member 2 and side member 3 were welded by inserting a probe (profiled nib) 9 of a rotating tool 8 into the joint portion5 while stirring with the rotating shoulder 10 of the tool 8. The diameter d of the shoulder 10 of the tool 8 was 7 mm, the diameter of the probe 9 of the tool 8 was 3 mm, the rotating speed (revolutions per minute) of the tool was 2,700 rpm and the welding (transverse or (linear) moving) speed along the length of the butt joint 5 was 150 mm/min. Therefore, the revolution number r was calculated as 18 revolutions/mm.

After the welding was completed, the cover member 2 was subjected to face milling using a milling machine in order to remove 0.5 mm of material from its surface layer, i.e. until no surface irregularities were apparent on the welded area 4 or adjacent thereto. Then, the new surface of the cover member 2 was smoothed by paper polishing and buffing, and the anodized coating 6 was formed thereon using sulfuric acid until the anodized coating 6 reached a thickness of 10 µm (see Fig. 2E).

For comparison purposes, Table 2 also shows two other test results, in which the respective cover members 2 and the side members 3 formed from the above-mentioned three types of alloys were also integrally welded/fused by laser welding and metal inert gas (MIG) welding, respectively, followed by formation of the respective anodized coatings 6.

When the 5052 alloy (comparative example) was used, streak-like variations in color or lightness (color tone differences) appeared in the anodized coating 6 along the portion corresponding to the welded area 4 regardless of the welding technique (i.e. regardless of whether friction stir welding, laser welding or melt welding was performed). On the other hand, when friction stir welding ("FSW") was performed on alloys 1 and 2, no streak-like variations in color or lightness (color tone differences) appeared in the anodized coating 6 formed on the surface of the aluminum alloy panel 1 along the portion corresponding to the welded area 4, as shown in the following Table 2.

**(Table 2)**

| Materials | Welding Method | | |
|---|---|---|---|
| | FSW | Laser Welding | MIG Welding |
| Alloy 1 | ○ | × | × |
| Alloy 2 | ○ | × | × |
| 5052 Alloy | × | × | × |

| | | | |
|---|---|---|---|
| **○ : without streak pattern** **× : with streak pattern** | | | |

In order to further elucidate preferred embodiments of the present teachings, aluminum alloy panels 1 comprised of cover members 2 and side members 3 formed from alloy 2 shown in Table 1 were subjected to variations in the friction stir welding conditions, in particular to variations in the shoulder diameter and the revolution number of the tool, as shown in Table 3 below. That is, after completing the welding operation according to different welding parameters, the cover member 2 was subjected to face milling using a milling machine to remove 0.5 mm from its surface layer, which was then smoothed by sand paper polishing and buffing. Then, the anodized coating 6 was formed thereon by anodizing using sulfuric acid to provide an anodized coating 6 having a thickness of 10 µm. It was then confirmed whether streak-like variations in color or lightness (color tone differences) were apparent or not.

Table 3 shows the test results. No streak-like variations in color or lightness (color tone differences) appeared in any of examples 1 to 5, in which the shoulder diameter and the revolution number of the tool were within the preferred ranges.

On the other hand, streak-like patterns were observed in examples in which the shoulder diameter or the revolution number of the tool was outside of the preferred limits (see e.g., comparative examples 2 and 4) . In comparative example 1, the shoulder diameter was less than the preferred lower limit and the welding was incomplete, which resulted in several un-welded portions. In comparative example 3, the revolution number of the tool was less than the preferred lower limit and cavities were formed in the welded parts.

**(Table 3)**

| | Diameter d of Shoulder (mm) | Revolution per minute (rpm) | Welding Speed (m m/ min.) | Revolution Number of Tool (revolution/ mm) | Color Tone Difference |
|---|---|---|---|---|---|
| | | | | | ○ : without Streak Pattern |
| | | | | | × : with Streak Pattern |
| Example 1 of the present invention | 3 | 1200 | 190 | 6.3 | ○ |
| Example 2 of the present invention | 5 | 1200 | 250 | 8 | ○ |
| Example 3 of the present invention | 8 | 2000 | 200 | 10 | ○ |
| Example 4 of the present invention | 5 | 2700 | 150 | 18 | ○ |
| Example 5 of the present invention | 5 | 3000 | 150 | 20 | ○ |
| Comparative Example 1 | 2.8 | 2000 | 200 | 10 | Incomplete Welding |
| Comparative Example 2 | 8.1 | 2000 | 200 | 10 | × |
| Comparative Example 3 | 5 | 1200 | 200 | 6 | Cavities in Welded Part |
| Comparative Example 4 | 5 | 2700 | 120 | 22.5 | × |

The present invention is generally applicable to any products that include integrally-welded aluminum alloy parts or materials, which preferably have an anodized coating formed thereon.

Representative, non-limiting examples of the present invention were described above in detail with reference to the attached drawings. This detailed description is merely intended to teach a person of skill in the art further details for practicing preferred aspects of the present teachings and is not intended to limit the scope of the invention. Furthermore, each of the additional features and teachings disclosed above may be utilized separately or in conjunction with other features and teachings to provide improved aluminum alloy panels and methods for manufacturing and using the same.

Moreover, combinations of features and steps disclosed in the above detailed description may not be necessary to practice the invention in the broadest sense, and are instead taught merely to particularly describe representative examples of the invention. Furthermore, various features of the above-described representative examples, as well as the various independent and dependent claims below, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method for welding together first and second aluminum alloy materials (2, 3), each comprised of a 5000-series aluminum alloy containing second phase particles having a diameter less than 5 µm in a distribution density of less than or equal to 10,000 second phase particles/mm², the method comprising:
abutting portions of the first and second aluminum alloy materials, and
friction stir welding along the abutted portions (5) to thereby integrally weld together the first and second aluminum alloy materials to form an aluminum alloy panel (1),
wherein the friction stir welding is performed using a tool (8) having a shoulder (10) under the following conditions:
the shoulder of the tool has a diameter (d) in the range of 3 mm ≤ d ≤ 8 mm and
the revolution number (r) of the tool is 6 < r ≤ 20, wherein r is tool revolutions/length of the weld (4) in millimeters.

2. The method according to claim 1, further comprising:
anodizing weld portion (s) (4) and non-welded portions of the surface of the aluminum alloy panel (1) to form an anodized coating (6) thereon.

3. The method according to claim 2, wherein the anodized coating (6) has a thickness that is greater than or equal to 5 µm and less than or equal to 15 µm.

4. The method according to claim 2 or 3, further comprising:
face milling at least the welded portion (s) (4) prior to the anodizing step.

5. The method according to any preceding claim, wherein the first aluminum alloy material (1) and the second aluminum alloy material (2) each have a thickness (t) that satisfies the relationship: 1 mm ≤ t ≤ 3 mm.

6. The method according to any preceding claim, wherein the revolution number (r) is 10 ≤ r ≤ 20.

7. The method according to any preceding claim, wherein the first and second aluminum alloy materials (2, 3) contain less than 0.10 wt% Si.

8. The method according to any preceding claim, wherein the first and second aluminum alloy materials (2, 3) contain less than 0.31 wt% Fe.

9. The method according to any preceding claim, wherein the first and second aluminum alloy materials (2, 3) contain more than 2.37 wt% Mg.

10. The method according to any preceding claim, wherein the first and second aluminum alloy materials (2, 3) contain less than 0.18 wt% Cr.

11. An aluminum alloy panel produced according to the method of any preceding claim.

## Amended claims

### Amended claims in accordance with Rule 137(2) EPC.

**1.** A method for welding together first and second aluminum alloy materials (2, 3), each comprised of a 5000-series aluminum alloy containing second phase particles having a diameter less than 5 µm in a distribution density of less than or equal to 10,000 second phase particles/mm², the method comprising:
abutting portions of the first and second aluminum alloy materials, and
friction stir welding along the abutted portions (5) to thereby integrally weld together the first and second aluminum alloy materials to form an aluminum alloy panel (1),
wherein the friction stir welding is performed using a tool (8) having a shoulder (10) under the following conditions:
the shoulder of the tool has a diameter (d) in the range of 3 mm ≤ d ≤ 8 mm and
the revolution number (r) of the tool is 10 ≤ r ≤ 20, wherein r is tool revolutions/length of the weld (4) in millimeters.

**2.** The method according to claim 1, further comprising:
anodizing weld portion(s) (4) and non-welded portions of the surface of the aluminum alloy panel (1) to form an anodized coating (6) thereon.

**3.** The method according to claim 2, wherein the anodized coating (6) has a thickness that is greater than or equal to 5 µm and less than or equal to 15 µm.

**4.** The method according to claim 2 or 3, further comprising:
face milling at least the welded portion(s) (4) prior to the anodizing step.

**5.** The method according to any preceding claim, wherein the first aluminum alloy material (1) and the second aluminum alloy material (2) each have a thickness (t) that satisfies the relationship: 1 mm ≤ t ≤ 3 mm.

**6.** The method according to any preceding claim, wherein the first and second aluminum alloy materials (2, 3) contain less than 0.10 wt% Si.

**7.** The method according to any preceding claim, wherein the first and second aluminum alloy materials (2, 3) contain less than 0.31 wt% Fe.

**8.** The method according to any preceding claim, wherein the first and second aluminum alloy materials (2, 3) contain more than 2.37 wt% Mg.

**9.** The method according to any preceding claim, wherein the first and second aluminum alloy materials (2, 3) contain less than 0.18 wt% Cr.

**10.** An aluminum alloy panel produced according to the method of any preceding claim.
